# EUROPEAN PATENT APPLICATION

(11) **EP 4 786 391 A1**
(43) Date of publication of application: **05.08.2026**
(21) Application number: 25212347.6
(22) Date of filing: 30.10.2025
(51) Int. Cl.: B65H 29/12, B65H 5/06, F16C 13/02, B65H 85/00

(54) **SHEET CONVEYING DEVICE AND CORRESPONDING IMAGE FORMING APPARATUS**

(30) Priority: 08.11.2024 JP 2024195708
(71) Applicant: Canon Kabushiki Kaisha, Tokyo 146-8501 (JP)
(72) Inventor: HAYASHI, Hideki, Tokyo 146-8501 (JP)
(74) Representative: Canon Europe Limited

(57) **Abstract**

A sheet conveying device includes a frame; a conveying roller unit (200) that includes a rotation shaft (201) that is rotatable, a roller (202) that contacts a sheet, and a bearing (203) that is electrically conductive and that rotatably supports the rotation shaft (201); and a bearing holder (400) that, by being attached to the bearing (203), fixes the conveying roller unit (200) to the frame. In the sheet conveying device, the bearing holder (400) includes a first member (401) that is made of an electrically nonconductive resin and a second member (402) that is made of an electrically conductive resin, and the second member (402) contacts the bearing (203) and the frame.

## Description

### TECHNICAL FIELD

The present disclosure relates to a technology related to a sheet conveying device that conveys sheets and to a technology related to an image forming apparatus that forms images on the sheets.

### BACKGROUND

Static electricity is produced at a conveying roller of a sheet conveying device due to, for example, friction produced by rotation of the conveying roller. Since the produced static electricity becomes a cause of, for example, a malfunction of a machine or an image defect, in order to remove the static electricity, it is necessary to ground the conveying roller. In Japanese Patent Laid-Open No. 2003-95463, the conveying roller is grounded by bringing a conductive bearing into contact with a grounded metal.

### SUMMARY

When a conveying roller with a bearing attached thereto is to be attached to a frame, the conveying roller is sometimes attached by using a bearing holder made of a nonconductive resin. In such a case, since the conveying roller cannot be grounded, a malfunction of a machine or an image defect caused by static electricity may occur. Accordingly, the present disclosure is directed to providing a sheet conveying device and an image forming apparatus that make it possible to reliably ground a conveying roller to a frame.

The present disclosure in its first aspect provides a sheet conveying device as specified in claim 1. Optional features are specified in claims 2 to 12.

The present disclosure in its second aspect provides an image forming apparatus as specified in claim 13.

The present disclosure in its third aspect provides a bearing holder as specified in claim 14.

According to the present disclosure, it is possible to provide a sheet conveying device and an image forming apparatus that make it possible to reliably ground a conveying roller to a frame.

Features of the present disclosure will become apparent from the following description of embodiments with reference to the attached drawings. The following description of embodiments is described by way of example.

### BRIEF DESCRIPTION OF THE DRAWINGS

Fig. 1 is a sectional view of an image forming system.
Fig. 2 is a perspective view of a conveying unit.
Fig. 3 is a sectional view of the conveying unit.
Fig. 4 is a perspective view of a structure of one conveying roller.
Fig. 5 is a schematic view of one bearing holder.
Fig. 6A is a sectional view of the bearing holder.
Fig. 6B is an enlarged view of the bearing holder.
Fig. 6C is an enlarged view of the bearing holder.
Fig. 7 is a perspective view of an upper conveying unit.
Fig. 8 is an explanatory view of attachment of one conveying roller.
Fig. 9A illustrates a state before one bearing holder is attached.
Fig. 9B illustrates a state after the bearing holder is attached.
Fig. 10A is a schematic view of a supporting plate to which one bearing holder is attached.
Fig. 10B illustrates a state in which the bearing holder is inserted in the supporting plate.
Fig. 10C illustrates a state after the bearing holder is attached to the supporting plate.

### DESCRIPTION OF THE EMBODIMENTS

The present embodiment is described below with reference to the drawings. It should be noted that since the embodiment that is described below is a preferred embodiment of the present disclosure, various limitations that are technologically preferable are added; however, the scope of the present disclosure is not to be unreasonably limited by the description below. Not all structural features that are described in the present embodiment are essential structural requirements of the present disclosure.

### First Embodiment

### Image Forming Apparatus

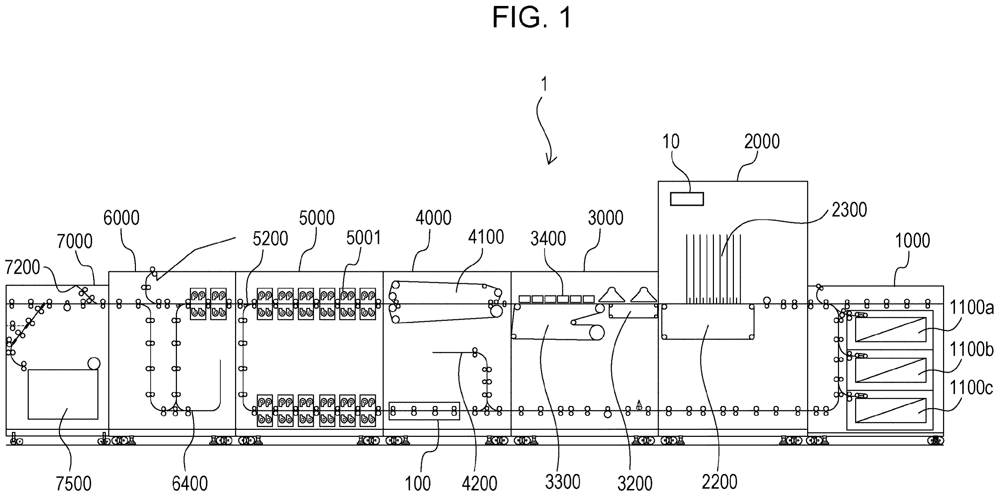

In the present embodiment, application of an image forming system to an inkjet recording system 1 is described. Fig. 1 is a schematic view illustrating an example of a schematic structure of the inkjet recording system 1. The inkjet recording system 1 is a sheet-fed inkjet recording system 1 that produces a recorded material where an ink image is formed on a sheet by using two types of liquids, a reaction liquid and ink.

The inkjet recording system 1 of the present embodiment is a combination of an image forming apparatus and a plurality of sheet conveying devices. Here, a device that is self-supportable due to undercarriages, such as casters or adjusters, and that is independent as a housing is defined as a module and described.

The inkjet recording system 1 includes a sheet-feeding module 1000, a printing module 2000, a drying module 3000, a fixing module 4000, a cooling module 5000, a reversing module 6000, and a discharging stacking module 7000. Cut-paper-like sheets that are supplied from the sheet-feeding module 1000 are conveyed along a conveying path, are processed by each module, and are discharged to the discharging stacking module 7000 serving as a sheet discharging device.

The sheet-feeding module 1000, which is an example of a sheet feeding device, includes storages 1100a, 1100b, and 1100c that store sheets. The storages 1100a, 1100b, and 1100c are structured so as to be drawable toward a forward side of the device. At each of the storages 1100a, 1100b, and 1100c, sheets are fed one sheet at a time by a separation belt and a conveying roller, which are not shown, and the sheets are conveyed to the printing module 2000. It should be noted that while there are three storages, the storages 1100a, 1100b, and 1100c, the number of storages is not limited thereto and may be one or two or four or more.

The printing module 2000 includes a prior-to-image-formation registration correcting unit (not shown), a print belt unit 2200, and a recording unit 2300. Sheets conveyed from the sheet-feeding module 1000 have their tilts and positions corrected by the prior-to-image-formation registration correcting unit, and are conveyed to the print belt unit 2200. The recording unit 2300 is disposed at a position facing the print belt unit 2200 with a conveying path being interposed therebetween. The recording unit 2300 is a sheet processing unit that performs from above the sheets that are being conveyed a recording operation (printing) on the sheets by recording heads. The recording heads are disposed side by side along a conveying direction. In the present embodiment, a total of five line-type recording heads corresponding to four colors, Y (yellow), M (magenta), C (cyan), Bk (black), and also a reaction liquid is provided. It should be noted that the number of colors and the number of recording heads are not limited to 5.

For an inkjet method, for example, a method using a heating element, a method using a piezoelectric element, a method using an electrostatic element, or a method using an MEMS element can be used. Inks of respective colors are supplied from ink tanks (not shown) to the recording heads through respective ink tubes. A sheet that is printed at the recording unit 2300 is, by being conveyed by suction by the print head unit 2200, conveyed while a clearance is ensured between the sheet and the recording heads. The sheet that is printed at the recording unit 2300 is such that any displacement or color density of an image formed on the sheet is detected by an in-line scanner (not shown) that is disposed downstream of the recording unit 2300 in the conveying direction. A detection result is used to correct the printed image. In the present embodiment, the recording unit 2300 is an example of an image forming unit.

The drying module 3000 includes a decoupling unit 3200, a drying belt unit 3300, and a warm air blowing unit 3400. The drying module 3000 decreases a liquid component included in ink applied to a sheet at the recording unit 2300 of the printing module 2000, and increases the fixability between the sheet and the ink. The sheet printed at the recording unit 2300 of the printing module 2000 is conveyed to the decoupling unit 3200 disposed in the drying module 3000. In the decoupling unit 3200, the sheet can be conveyed due to the friction of a belt and air pressure from above the sheet, and, by weakly holding the sheet on the belt and conveying the sheet, the sheet on the print belt unit 2200 where an ink image is formed is prevented from being displaced. The drying belt unit 3300 is disposed below the sheet that is being conveyed, the warm air blowing unit 3400 is disposed above the sheet that is being conveyed, and the drying belt unit 3300 and the warm air blowing unit 3400 are disposed to face each other with the belt being interposed therebetween.

A sheet conveyed from the decoupling unit 3200 is conveyed by suction by the drying belt unit 3300, and at the same time, receives warm air from the warm air blowing unit 3400 and has its ink applying surface dried. It should be noted that the drying method may be, in addition to the method of applying warm air, a method combining a method of irradiating a sheet surface with electromagnetic waves (such as ultraviolet rays or infrared rays) and a conduction heat transfer method performed by contact with a heating element.

The fixing module 4000 includes a fixing belt unit 4100. The fixing belt unit 4100 includes an upper belt unit and a lower belt unit, and can fix ink to a sheet by causing the sheet to pass between the upper belt unit and the lower belt unit that have been heated.

The cooling module 5000 includes a plurality of cooling units 5001, and cools a hot sheet conveyed from the fixing module 4000. Each cooling unit 5001 takes outside air into a cooling box by a fan, increases the pressure in the cooling box, and causes air blown from a nozzle of a conveying guide to strike the sheet to thereby cool the sheet. The cooling units 5001 are disposed on both an upper side and a lower side of a conveying path, and cool both surfaces of the sheet.

The cooling module 5000 includes a conveying path switching unit 5200, and can switch between sheet conveying paths on the basis of when a sheet is to be conveyed to the reversing module 6000 and when a sheet is to be conveyed to double-sided conveying paths used in double-sided printing. When double-sided printing is to be performed, a sheet is conveyed to a conveying path at a lower side of the cooling module 5000. In this case, from the cooling module 5000, the sheet is further conveyed along the double-sided conveying paths of the fixing module 4000, the drying module 3000, the printing module 2000, and the sheet-feeding module 1000. Then, the sheet is conveyed again to the prior-to-image-formation registration correcting unit, the print belt unit 2200, and the recording unit 2300 of the printing module 2000, and is printed again by the recording unit 2300. It should be noted that a first reversing unit 4200 that reverses the front and back surfaces of the sheet is provided in a double-sided conveying unit of the fixing module 4000.

The reversing module 6000 includes a second reversing unit 6400, and can reverse the front and back surfaces of a sheet that is being conveyed and freely changes the orientations of the front and back surfaces of the sheet that is discharged.

The discharging stacking module 7000 includes a top tray 7200 and a stacking unit 7500, and aligns and stacks sheets conveyed from the reversing module 6000.

A controller 10 includes a CPU, RAM, and ROM, and controls each part of the inkjet recording system 1. In order to operate each electrical component at a desired timing and by a required control amount on the basis of information that is stored in ROM or a detection signal that is input from each sensor, the CPU outputs an output signal to each electrical component. ROM and RAM each store information data required to control each part, and the CPU reads the information data stored in ROM and writes the information data onto RAM. It should be noted that, in the present embodiment, the controller 10 may control an external computer connected to the inkjet recording system 1.

### Structure of Conveying Unit

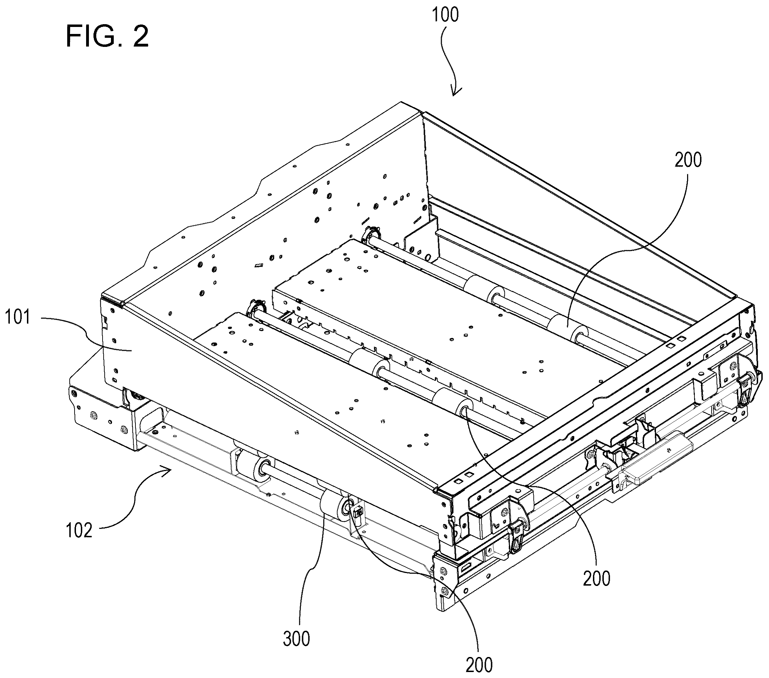

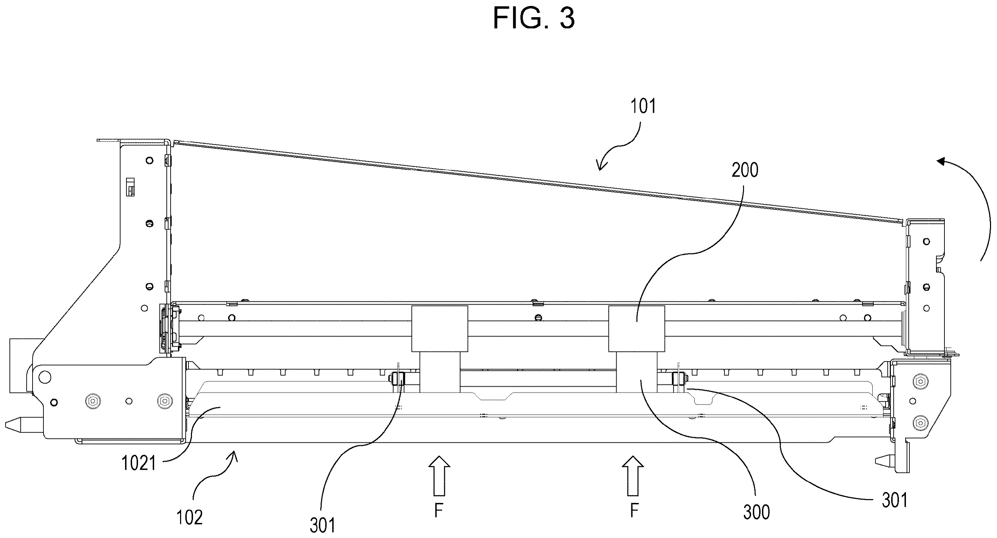

Fig. 2 is a perspective view illustrating a structure of a conveying unit 100. Fig. 3 is a sectional view of the conveying unit 100 in a direction perpendicular to a sheet conveying direction when viewed from an upstream side in the sheet conveying direction.

As shown in Fig. 1, the conveying unit 100 is disposed in the double-sided conveying path at the lower side of the fixing module 4000. However, since, in the image forming system, conveying rollers 200 are used at various locations where sheets are conveyed, the conveying unit 100 is described as one example.

The conveying unit 100 includes an upper conveying unit 101 that includes the conveying rollers 200, and a lower conveying unit 102 that includes a plurality of driven rollers 300. The conveying rollers 200 and the driven rollers 300 form pairs of conveying rollers, and a sheet is nipped and conveyed by the conveying rollers 200 and the driven rollers 300

The conveying unit 100 is capable of, when any sheet that is being conveyed is jammed, opening a sheet conveying path to allow a user to remove the jammed sheet. The lower conveying unit 102 is fixed to a frame of a main body of the apparatus, and the upper conveying unit 101 is rotatable upward with respect to the lower conveying unit 102 around a rotation shaft on a back side of the apparatus. It should be noted that, in the present embodiment, when the conveying unit 100 is attached to the main body of the apparatus, a front side is a side where a user stands to perform a jam clearance operation, and the back side is a side opposite to the side where the user stands to perform a jam clearance operation.

In a closed state of the upper conveying unit 101, the upper conveying unit 101 is locked so as not to open by a latch disposed on the front side. Therefore, as shown in Fig. 3, the conveying rollers 200 and the driven rollers 300 contact each other and the driven rollers 300 are pushed in, as a result of which conveying springs 301 that are each disposed on a side of a corresponding one of the driven rollers are compressed, and a nip pressure is produced at the conveying rollers 200. In the present embodiment, since the conveying rollers 200 are disposed at the upper conveying unit 101 and the driven rollers 300 are disposed at the lower conveying unit 102, a nip pressure F is applied upward toward the conveying rollers 200 from the driven rollers 300.

It should be noted that, while, in the present embodiment, the conveying rollers 200 are disposed on the upper side and the driven rollers 300 are disposed on the lower side, the present disclosure is not limited thereto. The driven rollers 300 may be disposed on the upper side and the conveying rollers 200 may be disposed on the lower side.

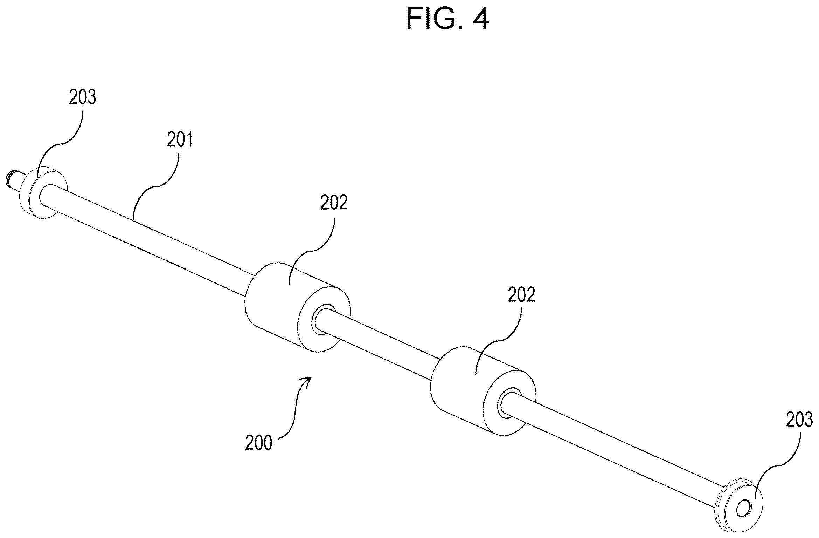

Fig. 4 is a perspective view of one conveying roller 200. The conveying roller 200 includes a roller shaft 201, rollers 202, and conductive bearings 203. The conductive bearings 203 are each disposed on a corresponding one of two ends of the roller shaft 201, and the rollers 202 are disposed between the bearings 203 disposed at the two ends of the roller shaft 201. The two conductive bearings 203 are bearings that rotatably support the roller shaft 201. The rollers 202 and the conductive bearings 203 are press-fitted to the roller shaft 201. By press-fitting the conductive bearings 203 to the roller shaft 201, there is no longer any sliding between the roller shaft 201 and the conductive bearings 203, as a result of which it is possible to suppress scraping of the roller shaft occurring due to reduced durability of the roller shaft 201. In other words, by press-fitting the conductive bearings 203 to the roller shaft 201, it is possible to provide a product having high durability. It should be noted that, in the present embodiment, the conductive bearings 203 are each one example of a bearing.

### Structure of Bearing Holder

Static electricity is produced at the conveying rollers of the sheet conveying device due to, for example, friction produced by rotation of the conveying rollers. Since the produced static electricity becomes a cause of, for example, a malfunction of a machine or an image defect, in order to remove the static electricity, it is necessary to ground the conveying rollers.

As shown in Fig. 4, when press-fitting the conductive bearings 203 to the roller shaft 201 and attaching the integrated conveying roller 200 to a frame of the conveying unit, it is necessary to regulate the movement of a thrust position of the conveying roller 200 ie the position of the conveying roller in an axial direction. Therefore, with a bearing holder holding one conductive bearing 203, the bearing holder is fixed to the frame. If, as the bearing holder, a bearing holder that is only made of a general non-conductive resin is used, grounding cannot be performed from a side where the conveying roller 200 is mounted on the bearing holder. Therefore, in the present embodiment, a bearing holder 400 includes two types of members, that is, a first member 401 that is made of a non-conductive resin and second members 402 that are made of a conductive resin.

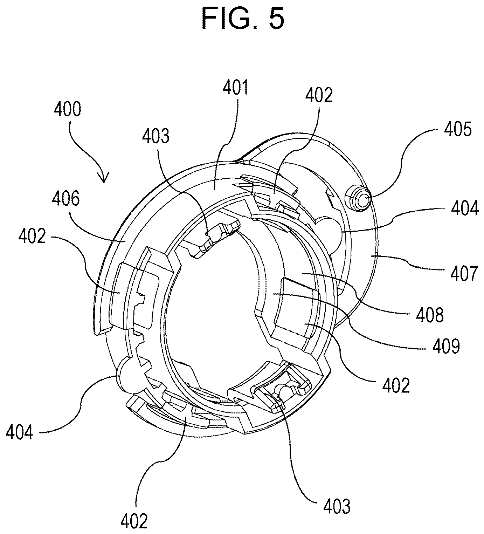

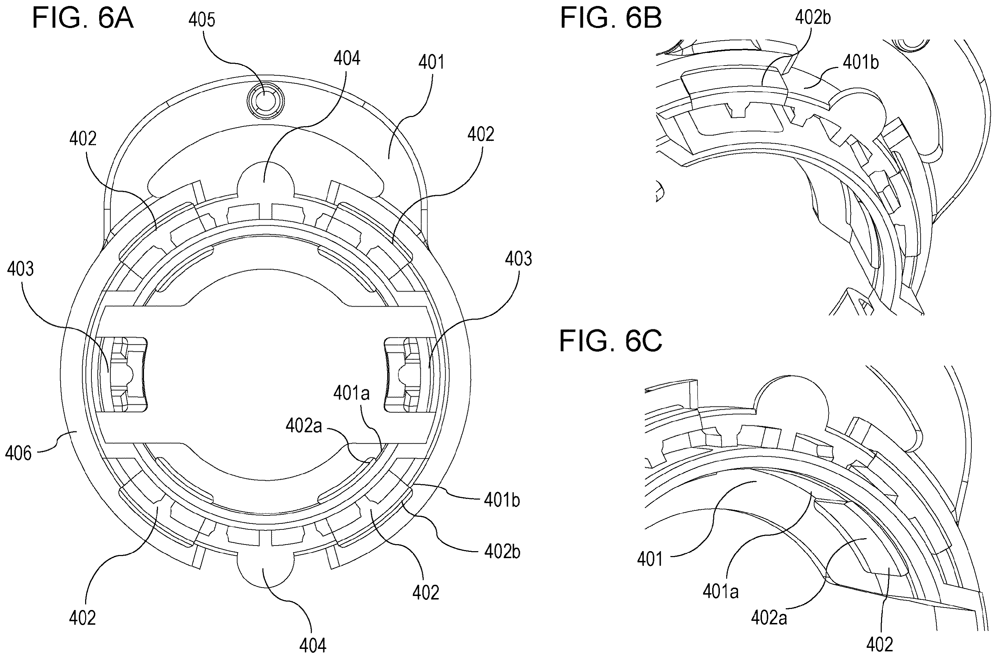

Fig. 5 is a schematic view of one bearing holder 400. Fig. 6 is a detailed view of the bearing holder 400. Specifically, Fig. 6A is a sectional view of the bearing holder 400. Figs. 6B and 6C are each an enlarged view of the bearing holder 400 when viewed from different angles. The bearing holder 400 holds one conductive bearing 203 of the conveying roller 200 and regulates the position of the conveying roller 200 in a thrust direction (an axial direction).

The bearing holder 400 includes, two members, that is, the first member 401 that is molded out of a general resin and the second members 402 that are molded out of a conductive resin, the members being formed by double-molding. It should be noted that the general resin is a non-conductive resin having high electrical resistance and through which electricity is unlikely to flow. In other words, the bearing holder 400 includes the first member that is made of a non-conductive resin and the second members that are made of a conductive resin. It should be noted that, in the present embodiment, it is preferable that the resistance value of the conductive resin be 100 kΩ or lower. In the present embodiment, the bearing holder 400 is such that each second member 402 is disposed at a part of the first member 401 as a base. In other words, the bearing holder 400 is such that the proportion of the first member 401 is larger than the proportion of each second member 402. Specifically, the proportion of the surface area of the first member 401 to the surface area of the bearing holder 400 is larger than the proportion of the surface area of each second member 402 to the surface area of the bearing holder 400. The present disclosure is not limited thereto, and thus the proportion of the volume of the first member 401 to the volume of the bearing holder 400 may be larger than the proportion of the volume of each second member 402 to the volume of the bearing holder 400.

Since, in general, conductive resin is more fragile than common resin, when the bearing holder 400 is only made of a conductive resin, the overall durability may be decreased or snap-fits 403 described below that hold the conductive bearing 203 corresponding thereto may be damaged. When, considering damage to the snap-fits 403 that are made of a conductive resin, the lengths of arms of the snap-fits 403 are made large, problems, such as an increase in the size of a component or a decrease in the holding force for holding the conductive bearing 203, occur. Therefore, it is preferable that each snap-fit 403 that elastically deforms be made of a general resin. This makes it possible to decrease damage to the snap-fits 403. Since the bearing holder 400 of the present embodiment includes the first member 401 that is molded out of a general resin and each second member 402 that is molded out of a conductive resin, the bearing holder 400 excels in durability and conductivity.

The first member 401 includes a cylindrical portion 408 that faces a circumferential surface of the conductive bearing 203 when the bearing holder 400 is mounted on the conductive bearing 203. The first member 401 further includes a flange 406 that projects outward in a radial direction of the conductive bearing 203 and an inner regulating portion 409 that projects inward in a radial direction of the conductive bearing 203. The first member 401 still further includes the snap-fits 403 that hold the conductive bearing 203, thrust position regulating portions 404 that prevent the bearing holder itself from being removed, a rotation regulating portion 405 that regulates the rotation of the bearing holder 400, and a handle 407. Each thrust position regulating portion 404 projects outward in the radial direction with respect to the cylindrical portion 408. The rotation regulating portion 405 is disposed on the handle 407, and projects in a thrust direction (axial direction) when the conductive bearing 203 is mounted. Since the snap-fits 403 hold the conductive bearing 403, the bearing holder 400 can be easily attached and detached. Therefore, when random malfunctioning occurs or periodic replacement is to be performed, the conveying roller 200 can be easily replaced.

Each second member 402 is disposed on the cylindrical portion 408 of the bearing holder 400 that holds the conductive bearing 203. In order to cause the second members 402 to be electrically conductive to the conductive bearing 203 that is held by the snap-fits 403, it is necessary to positively bring each second member 402 into contact with the conductive bearing 203. Therefore, in the present embodiment, the inside diameter of each second member 402 is smaller than the inside diameter of the first member 401. In order to cause each second member 402 to positively contact and to be positively electrically conductive to the frame that supports the bearing holder 400, the outside diameter of each second member 402 is larger than the outside diameter of the first member 401.

It should be noted that the inside diameter and the outside diameter of the first member 401 correspond to the inside diameter and the outside diameter of the cylindrical portion 408 of the first member.

Specifically, when mounted on the conductive bearing 203, the distance from a rotation center O of the conductive bearing 203 to an inside diameter portion 402a of each second member 402 is smaller than the distance from the rotation center O to an inside diameter portion 401a of the first member 401. When mounted on the conductive bearing 203, the distance from the rotation center O of the conductive bearing 203 to an outside diameter portion 402b of each second member 402 is larger than the distance from the rotation center O to an outside diameter portion 401b of the first member 401. In other words, the inside diameter portion 402a of each second member 402 is disposed to positively contact the conductive bearing 203, and the outside diameter portion 402b is disposed to positively contact the frame that is grounded.

It should be noted that, when the conductive bearing 203 has been mounted on the frame, the inside diameter portion 402a and the outside diameter portion 402b of each second member are, in the radial direction of the conductive bearing 203, disposed between the conductive bearing 203 and the frame. When the bearing holder 400 and the conductive bearing 203 have been mounted on the frame, the inside diameter portion 401a and the outside diameter portion 401b of the first member are, in the radial direction of the conductive bearing 203, disposed between the conductive bearing 203 and the frame.

In the present embodiment, four second members 402 are disposed on the circumference of the bearing holder 400. Since the conveying roller 200 is used at locations of various units where sheets are conveyed in the image forming apparatus, at what angle the bearing holder 400 is to be mounted on the frame differs depending upon various reasons, such as a location or space design or the arrangement of other components. Therefore, even if the bearing holder 400 is disposed at any angle, a roller pressure F is applied to each second member 402, and the four second members 402 are disposed on the circumference of the bearing holder 400 to reliably realize electrical conduction. In the present embodiment, in a circumferential direction of the bearing holder 400, two second members 402 each are disposed between two snap-fits 403. In other words, when the bearing holder 400 has been mounted on the conductive bearing 203, the second members 402 are symmetrically disposed with respect to a straight line that passes through the rotation center O of the conductive bearing 203 and the snap-fits 403.

If each second member 402 is disposed at a position where the roller pressure F of the conveying roller 200 is applied, electrical conduction is realized. Therefore, one or more second members 402 are disposed at positions on a semicircumferential side that receives the roller pressure when the conveying roller 200 conveys sheets. That is, it is preferable that, when viewed from a rotational axis direction of the conveying roller 200, each second member 402 be disposed on a side opposite to a nip portion of the conveying roller 200 with respect to a rotation center of the roller shaft 201. In the present embodiment, since the conveying roller 200 is such that the roller pressure F is applied from a lower side, it is necessary to dispose at least one or more second members 402 on a semicircumferential side at an upper side of the bearing holder when the bearing holder 400 has been mounted. However, the disposition, the number, or the size of the second members 402 may be determined as appropriate.

### Structure of Upper Conveying Unit

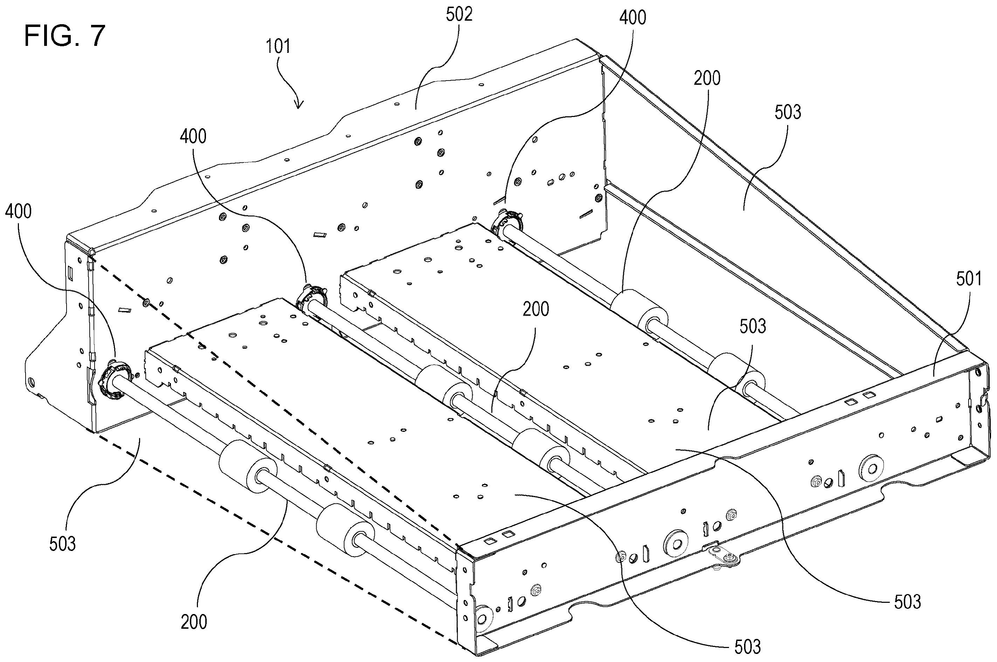

Fig. 7 is a perspective view of the upper conveying unit 101. The upper conveying unit 101 that supports the conveying rollers 200 includes a front supporting plate 501, a back supporting plate 502, supporting plates 503 that extend between the front supporting plate 501 and the back supporting plate 502, the conveying rollers 200, and the bearing holders 400. It should be noted that the front supporting plate 501, the back supporting plate 502, and the supporting plates 503 are each an example of the frame, are formed from a sheet metal, and are in contact with a grounded structural body. In other words, the frame is grounded. In the present embodiment, the back supporting plate 502 is an example of a side plate.

The conductive bearings 203 on the front side of the conveying rollers 200 are supported by the front supporting plate 501.

The conductive bearings 203 on the back side of the conveying rollers 200 are supported by the back supporting plate 502 through the bearing holders 400. Due to the rotation of the conductive bearings 203 disposed on the two sides, the conveying rollers 200 are freely rotatable.

It should be noted that, in the present embodiment, while the bearing holders 400 are mounted on the conductive bearings 203 on the back side of the conveying rollers 200, bearing holders 400 are not mounted on the conductive bearings 203 on the front side of the conveying rollers 200. In other words, while the bearing holders 400 are mounted on the conductive bearings 203 disposed at one end of the conveying rollers 200, bearing holders 400 are not mounted on the conductive bearings 203 disposed on the other end of the conveying rollers 200. Since the conductive bearings 203 on the front side contact the front supporting plate 501 due to the nip pressure F from the driven rollers 300, they are grounded without bearing holders 400. That is, in the present embodiment, the conveying rollers 200 are grounded at two locations, that is, on the back side and the front side. Specifically, the conductive bearings 203 on the front side are grounded by the front supporting plate 501 due to the nip pressure, and the conductive bearings 203 on the back side are grounded by the back supporting plate 502 through the second members 402, made of a conductive resin, of the bearing holders 400. In this way, by disposing the bearing holders 400 on only one end side of the conveying rollers 200, it is possible to decrease the number of components.

However, it is possible not to mount bearing holders 400 on the conductive bearings 203 on the back side of the conveying rollers 200, and to mount bearing holders 400 on the conductive bearings 203 on the front side of the conveying rollers 200. It is also possible to mount bearing holders 400 on both the conductive bearings 203 on the front side of the conveying rollers 200 and the conductive bearings 203 on the back side of the conveying rollers 200. However, as described below, in order to regulate the thrust positions of the conveying rollers 200 in the axial direction, bearing holders 400 need to be mounted on at least one side of the conveying rollers 200.

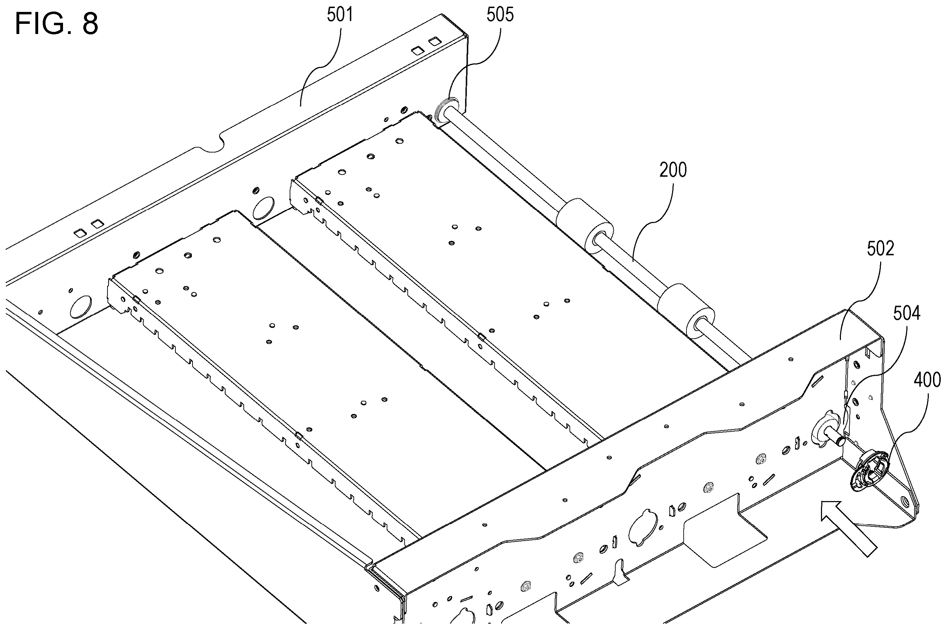

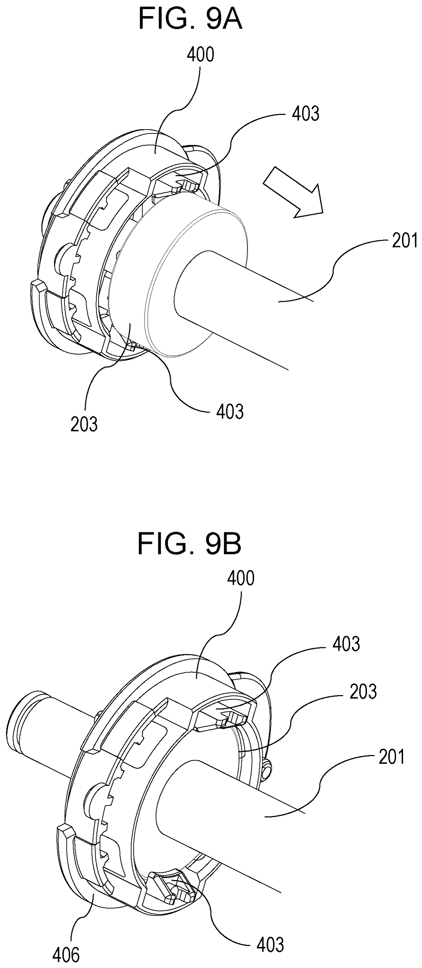

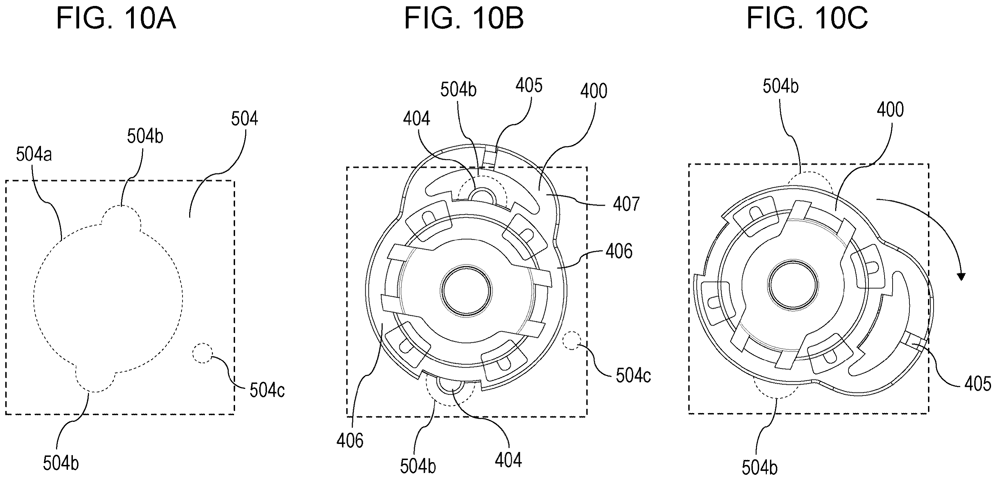

Fig. 8 is an explanatory view of attachment of one conveying roller 200 to the upper conveying unit 101. Figs. 9 and 10 are each an explanatory view of attachment of one bearing holder 400. Fig. 9A illustrates a state before the bearing holder 400 is attached to one conductive bearing 203. Fig. 9B illustrates a state after the bearing holder 400 is attached to the conductive bearing 203.

Fig. 10A illustrates a conveying roller attaching portion 504 of the back supporting plate 502. Fig. 10B illustrates one bearing holder 400 being inserted into the conveying roller attaching portion 504. Fig. 10C illustrates the bearing holder 400 after being attached.

Fig. 8 illustrates the upper conveying unit 101 when viewed from the back side thereof. The front supporting plate 501 has opening portions 505. The back supporting plate 502 includes the conveying roller attaching portion 504 that is an opening portion. It should be noted that, after the conveying roller 200 has been attached to the frame, when viewed from the sheet conveying direction, the conductive bearing 203 on the front side of the conveying roller 200 is disposed so as to overlap the front supporting plate 501.

After the conveying roller 200 has been attached to the frame, when viewed from the sheet conveying direction, the conductive bearing 203 on the back side of the conveying roller 200 and the bearing holder 400 are disposed so as to overlap the back supporting plate 502. However, since, in addition to the conductive bearing 203, the bearing holder 400 is disposed at the conveying roller attaching portion 504, the size of the conveying roller attaching portion 504 is larger than the size of the opening portion 505.

As shown in Fig. 8, when mounting the conveying roller 200, the conveying roller 200 is placed at the front supporting plate 501 and the conveying roller attaching portion 504 of the back supporting plate 502, and the bearing holder 400 is attached to the conductive bearing 203 on the back side (arrow in Fig. 8). At this time, as shown in Fig. 9, the bearing holder 400 is fitted to the conductive bearing 203 from the back side, and holds the conductive bearing 203 by the snap-fits 403 of the bearing holder 400. In the present embodiment, since the snap-fits 403 of the bearing holder 400 hold the conductive bearing 203, a tool, such as a driver, is not required, and the conductive bearing 203 can be easily attached to and detached from the bearing holder 400. It should be noted that, in the present embodiment, the conductive bearings 203 are conductive bearings without flanges. When the bearing holder 400 is attached to the conductive bearing 203, the inner regulating portion 409 contacts a side surface of the conductive bearing 203. Therefore, the conductive bearing 203 is held without penetrating the bearing holder 400 (Fig. 5).

Fig. 10 illustrates the conveying roller attaching portion 504 when viewed from the back side of the upper conveying unit 101 (arrow in Fig. 8). As shown in Fig. 10A, the conveying roller attaching portion 504 includes a circular portion 504a into which the cylindrical portion 408 of the bearing holder 400 is inserted, opening portions 504b into which the thrust position regulating portions 404 are inserted, and a positioning portion 504c into which the rotation regulating portion 405 is inserted. As shown in Fig. 10B, after the bearing holder 400 has been attached to the conductive bearing 203, the thrust position regulating portions 404 of the bearing holder 400 are aligned with the positions of the opening portions 504b to insert the bearing holder 400 into the back supporting plate 50. Thereafter, as shown in Fig. 10C, the bearing holder 400 is rotated and the rotation regulating portion 405 is fitted to the positioning portion 504c. Therefore, since the thrust position regulating portions 404 and the rotation regulating portion 405 are caught by the back supporting plate 502 and the bearing holder 400 no longer comes off the back supporting plate 502, the thrust position in the axial direction of the conveying roller 200 is determined. It should be noted that the rotation regulating portion 405 is disposed at the center of the ring-shaped handle 407, provided at the flange 406 so as to extend therefrom, and a user can easily insert the rotation regulating portion 405 into the back supporting plate 502. When the conveying roller 200 is to be replaced or removed, the conveying roller can be easily replaced by performing the above-described operations in the reverse order.

It should be noted that the flange 406 of the bearing holder 400 projects in the radial direction of the bearing holder 400, and the outside diameter of the flange 406 is larger than the outside diameter of the circular portion 504a of the conveying roller attaching portion 504. It should be noted that the shape of each thrust position regulating portion 404 of the bearing holder 400 is smaller than the shape of each opening portion 504b of the conveying roller attaching portion 504. In the present embodiment, the circular portion 504a is an example of a first opening portion, and each opening portion 504b is an example of a second opening portion. It should be noted that, after positioning the thrust position of the bearing holder 400 (Fig. 10C), each thrust position regulating portion 404 is positioned on an inner side of the back supporting plate 502, and the flange 406 is positioned on an outer side of the back supporting plate 502. In other words, by interposing the back supporting plate 502 between the thrust position regulating portions 404 and the flange 406 of the bearing holder 400, the position of the conveying roller 200 in an axial direction is regulated. In the present embodiment, each thrust position regulating portion 404 is an example of a first projecting portion, and the flange 406 is an example of a second projecting portion.

Due to the above-described structure, it is possible to reliably and stably ground the conveying roller 200 to the front supporting plate 501 and the back supporting plate 502 through the conductive bearings 203 and the bearing holder 400. It should be noted that the front supporting plate 501 and the back supporting plate 502 are grounded. Therefore, it is possible to provide a conveying roller structure that suppresses malfunctions caused by static electricity produced by rotational friction of the conveying roller 200, and that excels in durability and serviceability.

It should be noted that, while in the above-described embodiment, application of the image forming system to the inkjet recording system 1 using an inkjet recording method has been described, the image forming system is not limited thereto, and may be applied to an image forming system using an electrophotographic method.

Various embodiments have been described in detail above but it will be understood that the present disclosure is not limited to these embodiments and encompasses all modifications, variants, alternatives and equivalents falling within the scope of the appended claims.

## Claims

1. A sheet conveying device comprising:
a frame;
a conveying roller unit (200) that includes a rotation shaft (201) that is rotatable, a roller (202) that contacts a sheet, and a bearing (203) that is electrically conductive and that rotatably supports the rotation shaft; and
a bearing holder (400) that, by being attached to the bearing (203), fixes the conveying roller unit (200) to the frame,
wherein the bearing holder (400) includes a first member (401) that is made of an electrically nonconductive resin and a second member (402) that is made of an electrically conductive resin, and
wherein the second member (402) contacts the bearing (203) and the frame.

2. The sheet conveying device according to claim 1,
wherein, at a position where the bearing (203) is disposed in an axial direction,
a distance from a rotational center of the bearing (203) to an inside diameter portion (402a) of the second member (402) that contacts an outside diameter portion of the bearing (203) is smaller than a distance from the rotational center of the bearing (203) to an inside diameter portion (401a) of a cylindrical portion (408) of the first member (401), and
a distance from the rotational center of the bearing (203) to an outside diameter portion (402b) of the second member (402) that contacts the frame is larger than a distance from the rotational center of the bearing (203) to an outside diameter portion (401b) of the cylindrical portion (408) of the first member (401).

3. The sheet conveying device according to claim 1 or 2,
wherein a proportion of a surface area of the first member (401) to a surface area of the bearing holder (400) is larger than a proportion of a surface area of the second member (402) to the surface area of the bearing holder (400).

4. The sheet conveying device according to any one of the preceding claims,
wherein an area of contact between the first member (401) of the bearing holder (400) and the bearing (203) is larger than an area of contact between the second member (402) of the bearing holder (400) and the bearing (203).

5. The sheet conveying device according to any one of the preceding claims, further comprising:
a driven roller unit (300) that is disposed at a position facing the conveying roller unit (200) and that, together with the conveying roller unit (200), forms a nip portion,
wherein the driven roller unit (300) is urged toward the conveying roller unit (200) by a spring.

6. The sheet conveying device according to claim 5,
wherein, when viewed from a rotational axis direction of the conveying roller unit (200), the second member (402) is disposed on a side opposite to the nip portion with respect to a rotation center of the rotation shaft (201).

7. The sheet conveying device according to claim 6,
wherein the bearing holder (400) includes a plurality of the second members (402).

8. The sheet conveying device according to any one of the preceding claims,
wherein the conveying roller unit (200) includes two of the bearings (203), one disposed at each of two ends of the rotation shaft (201),
wherein the bearing (203) that is disposed at one of the two ends of the rotation shaft (201) has the bearing holder (400) mounted thereon, and
wherein the bearing (203) that is disposed at the other of the two ends of the rotation shaft (201) does not have the bearing holder (400) mounted thereon.

9. The sheet conveying device according to any one of the preceding claims,
wherein the bearing holder (400) includes a snap-fit (403) that holds the bearing (203), and
wherein the first member (401) includes the snap-fit (403).

10. The sheet conveying device according to any one of the preceding claims,
wherein the bearing holder (400) includes a first projecting portion (404) and a second projecting portion (406) that project in a radial direction of the bearing holder (400), and the first projecting portion (404) and the second projecting portion (406) are disposed at different positions in an axial direction, and
wherein by interposing the frame between the first projecting portion (404) and the second projecting portion (406) in the axial direction, a position of the conveying roller unit (200) in the axial direction is regulated.

11. The sheet conveying device according to claim 10,
wherein the bearing holder (400) includes a rotation regulating portion (405) that regulates rotation of the bearing holder (400), and
wherein the rotation regulating portion (405) can be fixed at a position reached by rotation from a position where the first projecting portion (404) has been inserted into an opening portion of the frame.

12. The sheet conveying device according to any one of the preceding claims,
wherein the bearing (203) is press-fitted to the rotation shaft (201).

13. An image forming apparatus comprising:
the sheet conveying device according to any one of the preceding claims; and
an image forming unit (2300) that forms an image on a sheet.

14. A bearing holder (400) comprising:
a first member (401) that is made of an electrically nonconductive resin and a second member (402) that is made of an electrically conductive resin,
wherein the bearing holder (400) is configured to be fixed to a frame a conveying roller unit (200) that includes a rotation shaft (201) that is rotatable and a bearing (203) that is electrically conductive and that rotatably supports the rotation shaft (201), and
wherein the second member (402) is configured to contact the bearing (203) and the frame.
